# EUROPEAN PATENT APPLICATION

(11) **EP 0 796 688 A1**
(43) Date of publication of application: **24.09.1997**
(21) Application number: 96935445.5
(22) Date of filing: 25.10.1996
(51) Int. Cl.: B22F 9/04, B22F 1/00, B22F 1/02, C22F 1/18, C09D 5/38, C01G 23/04

(54) **BRIGHT METALLIC TITANIUM PARTICLES, METHOD OF MANUFACTURING SAME, BRIGHT COLORING TITANIUM PARTICLES USING SAME, METHOD OF HEATING AND COLORING SAME, AND POWDER COMPOSED OF THESE TITANIUM PARTICLES**

(30) Priority: 27.10.1995 JP 280757/95; 27.10.1995 JP 280783/95; 27.10.1995 JP 280793/95
(71) Applicant: SUMITOMO SITIX CORPORATION, Hyogo 660 (JP)
(72) Inventor: KAMEOKA, Takeshi, Aichi-gun, Aichi 470-01 (JP); MIZUTANI, Katsuya, Owariasahi-shi, Aichi 488 (JP); MORI, Shigeru, Suita-shi, Osaka 565 (JP); WATANABE, Munetoshi, Suita-shi, Osaka 564 (JP)
(74) Representative: Wächtershäuser, Günter, Prof. Dr.
(86) International application number: JP9603122
(87) International publication number: WO9715412

(57) **Abstract**

Bright titanium particles are manufactured which are suitable as a bright material or the like of a metallic film. Spheroidal metallic titanium particles are crushed in one direction in a rolling treatment to be made into particles which have a scale shape to be even at inside and outside flat surface portions thereof and smooth at a peripheral edge of the scale shape. Formed on surfaces of the metallic titanium particles having the scale shape is a film of titanium oxide having a thickness in the range of 25 to 200 nm. Upon formation of the film of titanium oxide, a film of titanium oxide is formed by heating of at most 400 °C to have a thickness of 25 nm or more, and then is heated above 400 °C so that it can be grown to a thickness required for coloring.

## Description

### FIELD OF THE INVENTION

The present invention relates to titanium particles for use in brighteners for metallic coatings for vehicles and various pigments etc. and also powders consisting of such particles.

### BACKGROUND OF THE INVENTION

Hitherto-known as metallic titanium particles include atomized metallic titanium particles and sponge titanium particles. The atomised metallic titanium particles are fine metallic titanium particles obtained by quenching fused drops of metallic titanium atomized at a high speed, and spherical in shape. The sponge titanium particle is obtained by embrittling with hydrogen sponge titanium manufactured by Mg-reduction of metallic titanium, follwed by dehydrogenation after fine crushing, and has an amorphous form.

On the other hand, metallic titanium is known to develope chromatic colors like golden color etc., when nitrated or oxidized films are formed on its surface. The article "Usefulness of Coating Formed on Titanium Surface by Atomospheric Oxidation", as appears in a journal "Titanium and Zirconium", Vol.28, No. 2, issued April 1980, discloses that when a sheet material is heated in the atmosphere, oxidized coating laminates are formed on the surface of the sheet material, allowing them to have various colors corresponding to the heating conditions (oxidized coating thickness).

Recently, with regard to metallic titanium particles, besides sheet materials, developement of techniques for coloring them is in progress. The colored metallic titanium particles may be effectively utilized as brighteners for metallic coatings for vehicles, coating pigments for architecture and furniture etc., pigments of inks for painting and printing, colorants for ornaments and fibers etc., and cosmetics etc.

With regard to coloring metallic titanium particles, the present applicant has presented a method of coloring titanium particles being in flow in PPP (Provisional Patent Publication) No. Hei 3-173760, and a method of reacting coloring gases with titanium particles at high temperatures which are scattered from a turning electrode therearound in manufacturing titanium particles by the rotational electrode process in PPP NO. Hei-277765.

According to the former method, the above-described atomized metallic titanium particle or sponge titanium particle may be used. The form of the colored titanium particles manufactured by the latter method is spherical.

By the way, as the brightener for metallic coatings for vehicles, aluminum powder has hitherto been often used, but it can only correspond to silvery colors. Further, this aluminum powder is also a consealing brightener. In addition to this aluminum powder, mica or mica coated with TiO₂ are also used, but they are pearly pigments, which are capable of corresponding only to the white color base, and have low consealability. Besides glass beads may be mentioned as a brightener, but they have poor metallic feel and consealability.

As compared with these brighteners, conventional colored titanium particles have chromatic special features of their own different from those of these brighteners, and it is therefor expectable from them to provide coatings with tones heretofore unavailable. In comparison with the former brighteners, however, the latter often have lower brightness. On this account, it is the present situation that the chromaticity characteristic of the colored titanium particles has yet to be fully made the most of, and from this standpoint, development of colored titanium particles excellent in brightness is awaited.

Further, when manufacturing colored titanium particles from the metallic titanium particle, for example, there is used a method of obtaining colored titanium particles by heating the metallic titanium particle in the atmosphere, thereby forming its oxidized film on the particle surface. Titanium is a metal highly susceptible to oxidation, but the proceeding of its oxidation is not well known.

If they are heated at low temperatures, sometimes specified colors do not develope, and conversely if they are oxidized at relatively high temperatures, mottled colors sometimes develope, and occasionally the titanium particles burn, while being heated. Irregular colors may result from formation of entirely uncolored particles and colored particles in admixture. When colored titanium particles are used as pigments for paints, the colors are sometimes toned by conciously admixing different colors. Even in such cases, the original colorant particles are desirably in pure state.

The present invention has as its object providing a bright metallic titanium particle usable as a raw material for manufacturing high quality feel brighteners having chromatic features and functions different from those of conventional brighteners, and its manufacturing method.

Another object of this invention is to provide bright colored titanium particles usable as high quality feel brighteners having chromatic features and functions different from those of conventional brighteners.

Still another object of this invention is to provide a heat-tinting process of bright metallic titanium particle which enables less mottled titanium particles to be manufactured by stably tinting them in the specified chromaticity in manufacturing bright colored titanium particles from the bright metallic titanium particle.

Further object of this invention is to provide powders consisting of any of these titanium particles.

### DISCLOSURE OF THE INVENTION

### ○ Bright metallic titanium particle

The bright metallic titanium oparticle is a laminar particle consisting of metallic titanium, characterized in that said laminar particle has planar faces on the front and back thereof which are flat and smooth, with its periphery also formed smooth.

Here the planar faces being flat and smooth infers that they are not porous. Further, more preferably, they should have the form of a mirror which directly reflects light projected thereonto. Furthermore, its periphery fromed smooth infers that the peripbery has a profile of a contiguous smooth curve without being deeply notched nor fringed.

The bright metallic titanium particle of this invention should have the lamina which is desirably spherical. It should desirably has dimensions of a no more than 130µm lamina diameter, a no more than 5µm thickness and a no less than 25 aspect ratio.

Having flat and smooth planar faces on the front and back of the laminar particles, the bright metallic titanium particle of this invention excels in glittering brightness, and gives highly lucid color development due to heat treatment and uniform coloring degree in each particle. Moreover, because of the periphery of each laminar particle being smooth, these particles tend to be oriented to lamination parallel to each other, thereby manifesting a metallic feel which is highly bright, lucid and of high grade.

The bright metallic titanium particle of this invention may be used as concealing brighteners for metallic coatings for vehicles, for example, without the tinting treatment. By developing arbitrary chromaticities by way of suitable heat treatment, they may be effectively utilized as, for example, brighteners for metallic coatings for vehicles, coating pigments for architechture and furniture etc., pigments for painting and printing inks, colorants for ornaments or fibers etc. and cosmetics etc.

### ○ Manufacturing method of bright metallic titanium particles

The manufacturing method of a bright metallic titanium particle is a manufacturing method of the aforementioned bright metallic titanium particle, characterized in that a nonporous massive particle consistig of metallic titanium is crushed in one direction by rolling , to form a laminar particle having front and back planar faces which are flat and smooth, with its periphery formed smooth.

In the manufacturing method of a bright metallic titanium particle of this invention, the nonporous massive particle should desirably be an atomized spherical particle of metallic titanium. The diameter of the atomized spherical particle should desirably be 6-40µm. Further, the rolling should desirably be performed by use of a ball mill.

### ○ Bright colored titanium particles

The bright colored titanium particles of this invention are characterized in that they are provided with titanium oxide films with their thickness falling in the range from 25-200nm as the surface lamina of the aforementioned bright metallic titanium particle.

In the bright colored titanium particles of this invention, the titanium oxide films should desirably have uniform thicknesses falling in the range of 25-200nm.

The bright colored titanium particles of this invention have excellent glittering bright feel, give favorably lucid color devlopment at uniform degree in each particle, and furthermore are capable of manifesting arbitrary chromaticities including achromatic color. Particularly high grade metallic feel is obtained. Furthermore, they have sizes conforming to the current operating conditions in many applications.

The bright colored titanium particles may be effectively utilized as brighteners for metallic coatings for vehicles, coating pigments for architecture and furniture etc., pigments of inks for painting and printing, colorants for ornaments and fibers etc., and cosmetics etc.

### ○ Heat tinting process of bright metallic titanium particles

The present inventor has studied in detail on the heating temperature and the rate of oxidation in manufacturing the aforementioned bright colored titanium particles from the aforementioned bright metallic titanium particle as the raw material. As a result, it was found that heating at high temperatures tends to produce mottled color, and that heating at low temperatures fails to produce thick oxide film and requires long periods of time to provide the desired coloring. Further, it was discovered that with a specified thickness of oxide film formed at a low temperature, an oxide film having a specified thickness or a specified color which is formed thereafter may be readily obtained, which has led to completion of the heat-tinting process of bright metallic titanium particles of this invention.

The heat-tinting process of bright metallic titanium particles of this invention is a heat-tinting process applied to the aforementioned bright metallic titanium particle in manufacturing the aforementioned bright colored titanium particles, characterized in that by heating the aforementioned bright metallic titanium particle in the presence of oxygen and at a temperature(s) not higher than 400°C, an at least 25nm thick oxide laminate is formed on the surface of said particle.

The heating at the temperature(s) not higher than 400°C can effect turning deep golden the aforementioned bright metallic titanium particle.

For effecting tinting other than this, subsequent to the first step in which by heating the aforementioned bright metallic titanium particle in the presence of oxygen and at a temperatrae(s) not higher than 400°C, an at least 25nm thick oxide laminate is formed on said particle, a second step is performed in which by heatng the particles obtained by the first step in the presence of oxygen and at a specified temperature(s) over 400°C, the aforementioned oxide laminate is let grow to the thicknesses corresponding to the desired colors.

The heat-tinting process of bright metallic titanium particles of this invention heats the titanium particle at a temperature(s) not higher than 400°C in the presence of oxygen. In this way, at least a 0.025µm oxide film is formed on the surface of titanium particle. Since the heating is done at a low temperature(s) not higher than 400°C, the oxidation proceeds gradually, yielding a uniform thickness of oxide film. Accordingly, a titanium particle less mottled and colored deep golden is obtained. Because of gradual oxidation, burning of titanium particle that might result from sudden heating and the like inadequacies is averted. By this process, a titanium particle colored deep golden is produced. If tinting in chromaticities other than the deep golden color, the following second process is to be perfomed.

The second step forms oxide films with thicknesses corresponding to any desired colors on the surface of the titanium partcle by heating it at specified temperatures over 400°C. It is to note that even when the heating is done at temperatures over 400°C, since the specified thickness of oxide film has already been formed on the colored surface and the oxygen is supplied by its diffusion through the oxide film, such inconveniences as rapid progress of oxidation and partially different rate of oxidation etc. do not take place. Consequently, oxide films having uniform specified thicknesses are obtained. Thus by providing the specified thicknesses of oxide films, the tinting may be done in the desired chromaticities having the specified interference colors, whereby titanium particles colored in less mottled desired chromaticities are obtained.

The heat-tinting process of bright metallic titanium particles of this invention should desirably heat said particle gradually at a heating rate not higher than 800°C/hr in heating the aforementioned bright metallic titanium particle in the presence of oxygen and at a temperature(s) not higher than 400°C.

The heating at 400°C or lower should desirably hold the final temperature for 20 min or longer.

The heat-tinting process of bright metallic titanium particle of this invention ensures producing bright colored titanium particles which are unmottled and with the specified colors developed.

### ○ Powders

The powders of this invention consist of the aforementioned bright metallic particle or the aforementioned bright colored titanium particles.

### BRIEF DESCRIPTION OF THE DRAWINGS

FIG. 1 Shows an SEM photograph showing the appearance of the bright metallic titanium particles of this invention;
FIG. 2 Exhibits an SEM photograph showing the appearance of comparative metallic titanium particles;
FIG. 3 Shows an SEM photograph showing the appearance of the bright metallic titanium particles of this invention; and
FIG. 4 Exhibits an SEM photograph showing the appearance of comparative metallic titanium particles.

### BEST MODES FOR CARRYING OUT THE INVENTION

### ○ Bright metallic titanium particle

The profile of the bright metallic titanium particle of this invention should preferably be elliptical, or more preferably circular. More specifically, the particle should desirably be a lamina having a 130µm or less diameter, a 5µm or less thickness and a 25 or more aspect ratio.

According to this invention, the lamina is defined to be a scaly sheet form. Its planar faces should be circular, elliptical, or square etc., but not limitted thereto, and for reason of ease of orientation to parallel lamination in the coating, circular form should particularly be preferable. The peripheral edge of the lamina needs to be formed unfringed and smooth. Otherwise, there is a possibility that particles might not slide well on each other, such that, for example, some would stand at angles to the others, without forming parallel lamination in the coating, resulting in loss of brightness and lucidity of color etc.

The state of the planar faces front and back of the laminar particle needs to be horizontal surfaces which are flat and smooth, or which are nonporous and loss irregular. Their being not flat and smooth would give rise to inadequacies like reduced brightness and nonuniform coating color.

The size of the bright metallic titanium particle should preferably be a 130µm or less diameter on the average, and particularly each partcle should preferably have a 130µm or less diameter. If the metallic titanium particle have sizes larger than those given above, individual particles appear too conspicuous to the naked eyes. Such particles would produce reflection light from coarse grained surfaces, resulting in lost high-grade feel and chromaticity.

The bright metallic titanium particle should have a planar part of 5µm or less thickness, particularly individual particles should preferably have such a thickness. If the particle is thicker than this, it becomes hard to reflect light through this thickness, resulting in development of turbid dark feel color as a whole and also lost brightness.

From the above-described viewpoint, the aspect ratio of the metallic titanium particle should preferably be on the order of approx. 25 or higher, particularly, on the order of 40. At this degree of aspect ratio, its brightness is excellent, and the handling difficulty due to its being too thin may be averted. When it is intended to reveal shaded brightness, smaller aspect ratio may be used, but it needs to have a minimum 15 or larger aspect ratio.

The individual particles' diameters and thicknesses and the average values for powder of bright metallic titanium particles are as described hereinabove, but it is permissible in virtual operations to mix some particles unacceptable, in terms of form or flatness of the planar part, within a range on the order of 5% of the whole particles, for example.

### ○ Manufacturing method of bright metallic titanium particle

As the raw material for use in manufacturing the bright metallic titanium particle of this invention, nonporous and massive particle, particularly atomized spherical particle of metallic titanium is preferable. In order to have the aforementioned optimal sized circular bright metallic titanium particle, the atomized spherical particles used should preferably have a diameter from 6µm-40µm.

This atomized spherical particle infers a spherical particle manufactured by an atomizing process of acting high pressure gas on molten metal flow of heat-fused titanium.

Porous and nonmassive materials like sponge titanium are not suitable as raw materials for manufacturing the bright metallic titanium particle of this invention. Because when such a particle is formed laminary, the particle has front and back planar faces which are not flat and smooth, and has fringed profile at its periphery. Moreover, it produces nonlaminar fine powder which causes chromatic turbidity.

Whichever type of rolling is usable, if it is capable of rolling the raw material spherical particle into the lamina. In conection with the size of the raw material spherical particle, virtually applicable methods may include use of ball mills, rolling, and stamp mills etc., working with ball mills being more preferable. It is to note that the ball mill used will not be restricted in style.

In the case of ball milling, for 400cc pot capacity, 20g charging rate of powder, and 60cc dispersant, it is proper to run the ball mill with about 10-20mm dia. size steel balls at a 60 rpm rotational speed for about 20 hr. Under overworking conditions, there will occur such inadequacies as irregular powder form, reduced flatness and smoothness of the planar faces of powder and excessive formation of very fine powder and so on. Under underworking conditions, the aspect ratio of the powder produced tends to be insufficient.

The pot capacity of the ball mill and the charging rate of raw material particles, the size and numbers of the steel balls used, and the number of revolutions of the ball mill may be set, as approriate, to meet the requirements. It is proper to choose from well-known or routinely used dispersants for this purpose, as appropriate. Among them fatty acids, especially oleic acid is preferable.

### ○ Bright colored titanium particles

The bright colored titanium particle has metallic titanium in its interior and a titanium oxide film as its surface coating, forming a double lamination construction, and the color developed therefrom differs depending on the thickness of the oxide film of surface coating. This colored titanium particle, being in a laminar form, gives a glittering brightness. Higher brightness and lucidity is achieved because of the front and back planar faces of the laminar particle being flat and smooth. Further, the laminar particle's periphery is formed smooth (without being fringed), this contributing to still higher brightness and lucidity.

The titanium oxide film laminate should preferably have a uniform thickness ranging from 25-200nm. By forming the titanium oxide film laminate with a uniform thickness falling within the range of 25-200nm according to the specified color of the colored titanium particle, any arbitrary color may be developed with uniformity and lucidity. It should be noted that the relationship between the thickness of the titanium oxide film laminate and the color manifested are referenced also in the aforementioned prior art literature (10-25nm correspond to yellow, 25-70nm to blue, 70-150nm to bluish green, and 170nm or more to white); thus it is possible to have any desired color by adjusting the thickness of the titanium oxide film laminate through appropriate choice of the conditions of oxidation.

The bright colored titanium particles should preferably have particle dimensions of not more than 130µm diameters and not more than 5µm thicknesses. Colored titanium particles having appropriate diameters of 130µm or less and thicknesses of 5µm or less can manifest high-grade brightness and copious chromaticity. This size particularly meets the current working conditions, when they are applied to coatings or fibers. Further, avoidance of admixture of bulky particles eliminates any light reflection from coarse texture attributable to bulky particles, thereby securely preserving the quality.

Any planar forms are usable such as circular, elliptical and square and so on, but for reason of facility in orienting the particles to parallel lamination in the coating, for example, particularly circle is preferable. The planar form needs to have unfringed smooth periphery. If the periphery is not smooth, particles do not slide well on surfaces of other materials or on each other and consequently, for example, some particles stand in the coating at some angles thereto without being oriented to parallel lamination, resulting in lost brightness and lucidity of color.

The particle should preferably have the front and back planar faces in the state of horizontal surfaces which are flat and smooth or not much corrugated. If they are not flat and smooth, such inadequacies as reduced brightness and nonuniform coating color.

The particles should have such a profile as elliptical or preferably circulr form. More specifically, the particles should preferably have laminae of no more than 130µm diameters, no more than 5µm thicknesses and no less than 25 aspect ratios. The metallic titanium particles should preferably have no more than 5µm average thicknesses, particularly, thicknesses of individual particles. If the particle is thicker than this, light reflection in the thickness direction is difficult to make, producing turbid and dark color as a whole and impaired brightness.

On these accounts, the aspect ratio should be on the order of about 25 or above, preferably on the order of 40. The aspect ratios on this order provide excellent brightnesses, and makes it possible to preclude the handling difficulty due to being too thin laminates. When intentionally revealing shaded brightness, the aforementioned aspect ratio is permitted to be small, but needs to be 15 or larger.

Although the diameter and thickness and the average diameter and thickness of individual particles in the powders of colored titanium particles are as described above, in actual applications, admixture of particles having unacceptable forms or flatness and smoothness of planar faces is permissible within the range of about 5% of the total particles, for example.

### ○ Heat-tinting process in manufacturing bright colored titanium particles

The bright colored titanium particles of this invention are essentially manufactured by forming the titanium oxide laminates in the specified states on the surface of the aforementioned bright metallic titanium particle by way of heat treatment in an oxidizing atomosphere.

The heat treatment heats the titanium particles in the presence of oxygen and at a temperature(s) not higher than 400°C, thereby forming an at least 0.025µm oxide laminate on the surface of said titanium. In this way a deep golden colored titanium particle is obtained.

Accordingly, if the color wanted to have is deep golden color, it is proper to end the heating at this stage, or a first step. If it is desired to produce any color other than the deep golden color, there should be added a step, being a second step, of forming an oxide laminate with a thickness corresponding to the desired color, by conducting the heating at a specified temperature over 400°C.

The first step uniformly forms an at least 0.025µm oxide laminate on the surface of the titanium particle. It can produce a titanium particle colored deep golden. This process may be run either by heating for a specified period of time at a definite specified temperature not higher than 400°C, thereby to form an at least 0.025µm oxide laminate, or by a method of forming an at least 0.025µm oxide laminate on the surface of titanium particle before heating it up to 400°C by gradually raising the temperature, or by forming an at least 0.025µm oxide laminate by gradually raising the temperature to a specified temperature, thereafter continuing the heating at that temperature for a specified period of time.

Titanium is a relatively active material which generates heat due to oxidation at the initial stage of oxidation, and sometimes its oxidation abruptly proceeds. For this reason, it is preferable to raise the heating temperature gradually.

The gradual heating should desirably be done at a heating rate not higher than 800°C/hr. Within this range, the raw material titanium particle may be uniformly heated.

The heating up to 400°C in this step produces an oxide laminate of uniform thickness, with the titanum particle colored deep golden. If the desired color is deep golden color, the process is ended at this step. If any other coloration is desired, the following second step is to be taken. In this step, the final temperature reached by temperature raising should be held no less than 20 min. This temperature holding will make more uniform the thickness of the oxide laminate formed.

The second step is to effect coloration other than in deep golden, by making thicker the oxide laminate obtained by the aforementioned step, a step for forming an oxide film of a thickness corresponding to a desired color by making the heating at a temperature over 400°C. The thickness of the oxide laminate of titanium particle at which the interference color emerges is said to be 0.01-0.2µm. Thus the second step may be defined as a step of forming 0.025-0.2µm titanium oxide laminate.

The heating process of this second step may be carried out either by forming the oxide laminate with a specified thickness (and in a specified color) by way of heating at a specified temperature not lower than 400°C for a specified period of time similarly as in the aforementioned step, although different in the heating temperature, or by forming the oxide laminate with a specified thickness (and in a specified color) by way of gradually raising the temperature until the specified temperature over 400°C is reached, and thereafter holdng this temperature for a specified period of time. It may also be performed in such a way as by making the heating at a specified temperature over 400°C, thereafter continuing the heating at a still higher temperature for a specified period of time.

The heating temperature of the second step is to be altered depending on the interference color intended to have. In order to provide green which requires a relatively thick oxide laminate, the heating should preferably be done at such a high temperature as about 600°C, and conversely in order to provide purple from a thiner film, the heating should preferably be done at such a low temperature as 450°C.

Whichever process is used, care should be taken to ensure that the progress of oxidation should occur uniformly at the part near the surface and the interior of the deposit of the raw material titanium particles. For achieving the uniform heating, for example, make the heating with the titanium particles fluidized is also considered effective.

For the atmospheric gas, high partial pressure of oxygen is preferable. Ordinary air may be used as the atmospheric gas. In special instances, an atospheric gas with lower oxygen partial pressure is usable, but at least 1 × 10⁴ Pa (0.1 atm) oxygen partial pressure is required.

### ○ Preferred embodiments

In the following, this invention will be described more specifically in reference to some embodiments thereof:

### (Example 1)

The ball mill used had 400cc (80 ⌀ ID × 80 height) pot capacity, the pot material being silicon nitride, balls being 9.5mm ⌀ steel balls, and 300cc ball capacity. The material powder of titanium particles used was a powder of gas-atomized titanium particles (-350 mesh), and the amount of this powder charged in was 20g. Then as a dispersant, 60cc oleic acid was added.

The driving conditions of the ball mill for conducting the rolling were specified to be a rotary driving of the pot at 60 rpm/min for 10 hr. After this rolling operation, the powder and the balls were separated, and the rolled powder was washed with hexane, to remove the oleic acid adhering on its surface. The powder obtained was dried for 20 hr in a dessicator set at 100°C.

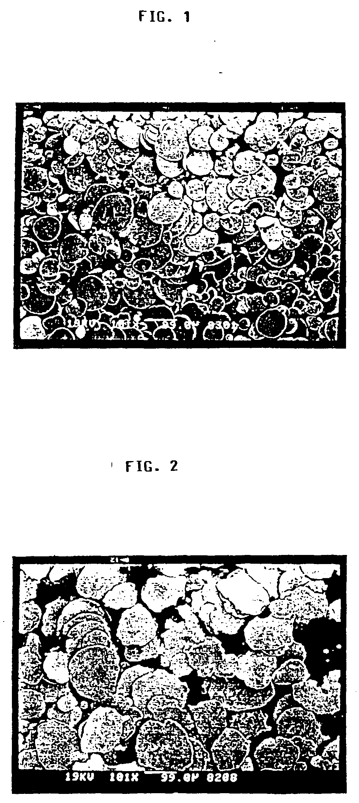

The powder manufactured in this way appeared in the form of a disk having flat and smooth surfaces and smooth periphery, as shown in the SEM (scanning electron microscope) photograph of FIG. 1. Most of the particles had a size of 50-60µm diamiters and 1-2µm thicknesses.

### (Comparative Example 1)

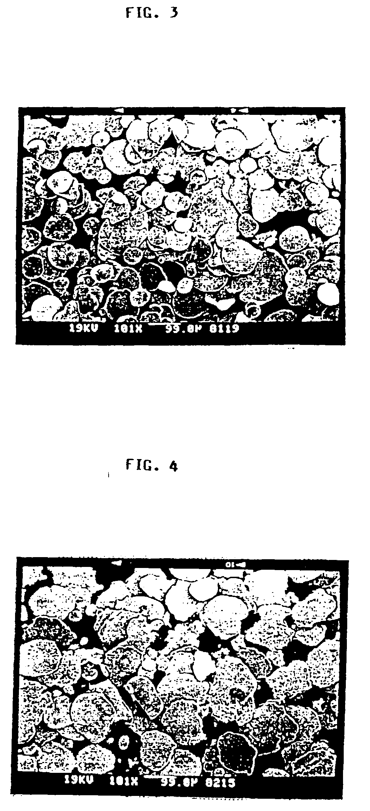

The rolling process was run under the same conditions of Example 1, using sponge titanium powder (-200 mesh) as the raw material powder. The powder produced showed its surface having corrugation and fine powder sticking thereon and its periphery appearing not smooth but pointed or rounded, as seen in the SEM photograph of FIG. 2.

The sponge titanium powder itself has a form being substantially unstable and a surface being not flat and smooth. When such powder is subjected to the ball milling, the form of the powder turned laminar becomes unstable, with the degree of overlapping one on another particle affecting the lamination efficieny. Although the powder appears laminar, as macroscopically observed, the surface of the powder does not appear agreeably good. The form of the material powder and its surface state have the affects. Sponge titanium particles of complex forms have been turned laminar, while being scattered, and the fine powder produced at that time adheres on their surfaces, or original surfaces of the particles are corrugated. On these accounts, smooth surface is not obtained.

### (Example 2)

The ball mill used had 4000cc pot capacity, the pot material being zirconia and balls being 10kg of 10.0mm ⌀ stainless steel balls. The powder of the material titanium particles used was an atomized titanium powder (spherical) of 20µm mean particle diameter and 50µm max. diameter, and the amount of powder charged in was 600g. Then as a dispersant, 900g of oleic acid was added.

The rolling process was run for 8 hr with this zirconia pot placed in a planetary mill, to be driven at 100 (rpm) revolution and 150 (rpm) rotation. Therefter, the powder and the balls were separated, and the rolled powder was cleaned with acetone, to remove the oleic acid sticking on its surface. The powder obtained was dried for 20 hr in a dessicator set at 100°C.

The powder adjusted in this manner gave an appearance of a disk having surfaces which were flat and smooth and perifery which was smooth, as shown by its SEM photograph in FIG 3. Most of the particles had a size of 50-60µm diameter and 1-2µm thickness.

As a guide to the brightness of the powder of particles, the psychometric lightness (L value) of the powder was measured by use of a spectrophotometric colorimeter. The result gave the L value at 65 for the laminar metallic titanium particle powder in Example 2.

It should be noted that the L value of the titanium atomized powder was 50 before conducting the rolling process, the powder appearing lustress gray.

### (Comparative example 2)

The rolling process was run under the same conditions of Example 2, using as the material powder 600 (g) of a crushed powder of sponge titanium which had passed a 45µm sieve, and employing 900 (g) of oleic acid similarly as in the Example. The powder obtained showed corrugation on the surface of particle, and its periphery was not smooth, but pointed or rounded.

The psychometric lightness of the powder obtained was also measured as in Exdample 2. The result gave an L value at 54 for the metallic titanium particle powder of Comparative Example 2, implying its inferiority in brightness to the laminar metallic titanium particle powder of Example 2.

It is to note that the L value for the crushed poder of sponge titanium before rolled was 42, the powder appearing deep gray.

### (Examples 3, 4, 5 and 6)

Three types of titanium atomized powder respectively having 25, 35 and 30µm particle diameters were used. The ball mill used had 4000cc pot capacity, the pot material being zirconia, and balls being 10kg of 10.0mm ⌀ stainless steel balls.

In this pot there were added 600g of one type of the aforementioned titanium atomized powder and 900g of oleic acid as a dispersant. With the zirconia pot placed in a planetary mill, this mill was run for 3-8 hr, driven at a 100 (rpm) revolution and a 150 (rpm) rotation. Thereafter, the powder and the balls were separated, and then the rolled powder was washed with acetone, to remove the oleic acid sticking on the surface. Then the powder obtained was dried for 20 hr in a dessicator set at 100°C.

In this manner the aforementioned 3 types of titanium atomized powder were rolled, yielding 3 types of laminar titanium particles. These 3 types of laminar titanium particle powder had mean particle diameters and mean thicknesses respectively of 50µm and 1.5µm, 100µm and 2.2µm, and 70µm and 2.5µm.

Next with these 3 types of laminar titanium particle powder used as the raw materials, and using a tubular nichrome furnace as the heating furnace, the powder mounted on a stainless steel boat was heated to 500°C in the atmosphere (one side of the throat opened).

The heating conditions were as follows: The heating was done up to 400°C, raising the temperature at a rate of 10°C/hr, and it was held at 400°C for 1 hr. Thereafter, the heating was continued until 500°C was reached at a temperature raising rate of 10°C/hr, and it was held at 500°C for 1 hr in Example 3. In Example 4, it was held at 500°C for 4 hr. In Example 5, it was held at 500°C for 12 hr, and in Example 6, at 500°C for 20 hr. Thereafter, the powder was taken out of the furnace and left cool in air. In this manner, titanium powders provided with respective colors listed on Table 1. were obtained.

The thickness of the heated oxide film was measured by the surface oxide analysis based on the Auger electron spectroscopy and with an optical interference thickness meter based on the spectrophotometric colorimetry. The measurement results obtained by these methods with the aforementioned 4 types of laminar colored titanium particle powder are given in Table 1. Besides, in Table 1, the mean particle diameter, mean thickness, oxidized laminate thickness and color of each laminar colored titanium particle powder are collectively listed.

As seen from Table 1, when the thickness of the heat-oxidized laminate was in the range of 50-200nm, and the particle diameter of the laminar powder no more than 130µm and its thickness no more than 5µm, colored titanium particles excellent in brightness and unmottled were obtained.

**Table 1**

| |
|---|
| Mean particle diameter of laminar powder |
| Mean thickness of laminar powder |
| Oxidized laminate film thickness Color |
| Brightness (L value) Remark |
| Example Bluish purple Sky color Light pink |
| Gray Unmottled |

### (Comparative Example 3)

Similarly as in Examples 3-6, laminar powder with a 50µm particle diameter and a 3µm thickness was manufactured. This powder was heated up to 350°C by raising the temperature at a rate of 10°C/hr, and it was held at 350°C for 1 hr. Thereafter, it was taken out of the furnace and left cool in air. The colored powder obtained had a heat-oxidized laminate with a 10nm thickness and recognzable brightness, but it was only partly colored light golden and notably mottled.

### (Comparative Example 4)

Similarly as in Examples 3-6, laminar powder with a 50µm particle diameter and a 3µm thickness was manufactured. This powder was heated up to 400°C by raising the temperature at a rate of 10°C/hr, and it was held at 400°C for 1 hr. Thereafter, it was heated up to 700°C by raising the temperature at a rate of 50°C/hr, and was held at 700°C for 1 hr. Subsequently, it was taken out of the furnace and left cool in air. The colored powder had a heat-oxidized laminate with a 250nm thickness, and had no brightness, but was colored grayish white and conspicuously mottled.

### (Comparative Example 5)

The unrolled titanium atomized powder with a 25µm particle diameter used in Example 3 was heated similarly as in Example 3. While in Example 3, unmottled titanium particles colored bluish purple were obtained with a 55 brightness, the colored titanium particle powder obtained in this example was lacking in brightness (45 brightness) and devoid of metallic feel.

Besides, sponge titanium powder (-350 mesh) was similarly heated. The colored titanium powder had a 43 brightness and was conspicuously mottled.

### (Examples 7, 8, 9, 10 and 11, and Comparative Example 6)

Fifty gram of titanium powder (50µm mean particle diameter and 2µm mean thickness) produced by rolling titanium atomized powder in a ball mill was oxidized in a stainless steel tray (crucible). The electric furnace used was a tubular nichrome furnace. The heating conditions were as follows:

In Example 7, the crucible was put in an electric furnace, heated from room temperature up to 400°C in 30 min, and held at 400°C for 20 min. Thereafter, it was taken out of the furnace, and left cool in air. In this way, a titanium powder developing deep golden color was obtained. The oxide laminate formed had a 0.025µm thickness. It was found to be free of color irregularity, and all assume generally identical color. The titanium powder had never burned.

In Example 8, the crucible was put in the electric furnace, heated from room temperature up to 400°C in 30 min, and held at 400°C for 20 min. Thereafter, it was heated up to 450°C in 10 min, and held at 450°C for 20 min. Then it was taken out of the furnace, and left cool in air. In this way, a titanium powder developing deep purple color was obtained. The oxide laminate formed had a 0.03µm thickness. It was found to be unmottled, and generally assume an identical color. The titanium powder never had burned.

In Example 9, the crucible was put in the electric furnace, heated from room temperature up to 400°C in 30 min, and held at 400°C for 20 min. Thereafter, it was heated up to 500°C in 15 min, and held at 500°C for 15 min. Then it was taken out of the furnace, and left cool in air. In this way, a titanium powder developing deep blue color was obtained. The oxide laminate formed had a 0.05µm thickness. It was found to be unmottled, and generally assume an identical color. The titanium powder never had burned.

In Example 10, the crucible was put in the electric furnace, heated from room temperature up to 400°C in 30 min, and held at 400°C for 20 min. Thereafter, it was heated up to 550°C in 40 min, and held at 550°C for 30 min. Then it was taken out of the furnace, and left cool in air. In this way, a titanium powder developing sky blue color was obtained. The oxide laminate formed had a 0.07µm thickness. It was found to be unmottled and generally assume an identical color. The titanium powder never had burned.

In Example 11, the crucible was put in the electric furnace, heated from room temperature up to 400°C in 30 min, and held at 400°C for 20 min. Thereafter, it was heated up to 600°C in 45 min, and held at 600°C for 1 hr. Then it was taken out of the furnace, and left cool in air. In this way, a titanium powder developing green color was obtained. The oxide laminate formed had a 0.1µm thickness. It was found to be unmottled and generally assume an identical color. The titanium powder never had burned.

In Comparative Example 6, the crucible was put in the electric furnace, heated from room temperature up to 500°C in 30 min, and held at 500°C for 3 min. Thereafter, it was taken out of the furnace, and left cool in air. The titanium powder had all brunt out, yielding gray titanium oxide. This was due to the fact that there had not been formed the no less than 0.025µm thick oxide laminate which would have been fromed at temperatures not higher than 400°C.

### INDUSTRIAL UTILITIES

The metallic titanum particle and powder of this invention have excellent glittering brightness, lucid color development from heat treatment and favorably uniform coloring degree in each particle. Further, the particles tend to orient to parallel lamination, thereby manifesting highly bright, lucid and high grade metallic feel. It is therefore useful as a shielding brightener, and is also useful as a raw material in manufacturing a brightner for e.g. metallic coating of vehicles, coating pigment for architecture and furniture, pigment for paints or printing inks, colorant for ornaments and fibers etc. and cosmetics etc.

The bright colored titanium particles and powders have excellent glittering brightness and in addition, lucid color development and favorable uniformity in the degree of color development in ech particle. Furthermore, they can develop any arbitrary colors including achromatic color. Especially, they produce high grade metallic feel. Besides, they are available in sizes which conform to the current operating conditions in many applications. They are therefore useful for e.g. brighteners for metallic coatings of vehicles, coating pigments for architecture and furniture etc., pigments for paints and printing inks, colorants for ornaments and fibers etc., and cosmetics and so on.

## Claims

1. A bright metallic titanium particle, being a laminar partcle consisting of metallic titanium, characterized in that said laminar particle has front and back planar faces which are flat and smooth, and saind laminar particle has a periphery which is formed smooth.

2. The bright metallic titanium particle according to Claim 1, wherein the laminar form is circular.

3. The bright metallic titanium particle according to Claim 1 or 2, wherein fthe lamina, the paricle is so identified, has no more than a 130µm diameter, no more than a 5µm thickness, and no less than a 25 aspect ratio.

4. A manufacturing method of a bright titanium particle, being a manufacturing method of the bright metallic titanium particle according to either one of Claim 1-3, characterized in that a nonporous, massive particle consisting of metallic titanium is crushed in one direction by way of rolling, thereby to produce a particle laminar in form, having front and back faces which are flat and smooth, with the periphery of the lamina formed smooth.

5. The manufacturing method of the bright metallic titanium particle according to Claim 4, wherein the aforementioned nonporous, massive particle is an atomized spherical particle of metallic titanium.

6. The manufacturing method of the bright metallic titanium particle according to Claim 5, wherein the aforementioned atomized spherical particle has a 6-40µm diameter.

7. A manufacturing method of a bright metallic titanium particle according to either of Claims 4-6, wherein the aforementioned rolling is done by use of a ball mill.

8. Bright colored titanium particles formed from the bright metallic titanium particle according to either of Claims 1-3, characterized in that the surface laminate of said particle is provided with a titanium oxide film of thicknesses ranging from 25-200nm.

9. The bright colored titanium partcles according to Claim 8, wherein the aforementioned titanium oxide film has uniform thicknesses ranging from 25-200nm.

10. A heat-tinting process applied to the bright titanium particle according to Claims 1-3, to produce the bright colored titanium particles according to Claim 8 or 9, characterized in that an at least 25nm thick oxide laminate is formed on the surface of said particle by heating the aforementioned bright metallic titanium particle in the presence of oxygen and at a temperature not higher than 400°C.

11. A heat-tinting process applied to the bright metallic titanium particle according to either of Claims 1-3, to produce the bright colored titaniium particles according to Claim 8 or 9, characterized in that said heat-tinting process of bright metallic titanium particle includes
a first step of forming an at least 25nm thick oxide laminate on said particle by heating the aforementioned bright metallic titanium particle in the presence of oxygen and at a temperature not higher than 400°C, and
a second step of letting the aforementioned oxide laminate grow to a thickness corresponding to any color desired to have by heating the particle produced by the first step in the presence of oxygen and at a temperature over 400°C.

12. The heat-tinting process of the bright metallic titanium particle according to Claim 10 or 11, wherein said particle is gradually heated at a heating rate not higher than 800°C/hr in heating the aforementioned bright metallic titanium particle in the presence of oxygen and at a temperature not higher than 400°C and holding it at this temperture.

13. The heat-tinting process of the bright metallic titanium particle according to either of Claim 10-12, wherein the aforementioned bright metallic titanium particle is colored deep golden by heating at temperatures not higher than 400°C.

14. The heat-tinting process of the bright metallic titanum particle according to either of Claims 10-13, wherein it is held at the final temperature for no less than 20 min in heating it at temperatures not higher than 400°C.

15. The heat-tinting process of the bright metallic titanium particle according to either of claims 10-14, wherein the oxygen density shall be 1 × 10⁴Pa or higher in terms of oxygen partial pressure.

16. The heat-tinting process of the bright metallic titanium particle according to Claim 15, wherein the heatng atmosphere is air.

17. Powder consisting of the bright metallic titanium particle according to either of Claims 1-3.

18. Powder consisting of the bright colored titanium particles according to Claim 8 or 9.
